# EUROPÄISCHE PATENTANMELDUNG

(11) **EP 2 415 968 A1**
(43) Veröffentlichungstag der Anmeldung: **08.02.2012**
(21) Anmeldenummer: 11175115.2
(22) Anmeldetag: 22.07.2011
(51) Int. Cl.: F01D 5/22, G01N 29/00, G01M 15/14

(54) **Verfahren zum Überprüfen der mechanischen Integrität von Stabilisierungelementen an den Laufschaufeln einer Turbine sowie Abtastvorrichtung zur Durchführung des Verfahrens**

(30) Priorität: 04.08.2010 DE 102010033302
(71) Anmelder: Alstom Technology Ltd, 5400 Baden (CH)
(72) Erfinder: Knowles, James, 5400 Baden (CH); Schott, Peter, 90619 Trautskirchen (DE); Maibach, Pascal, 5432 Neuenhof (CH)

(57) **Zusammenfassung**

Die Erfindung betrifft ein Verfahren zum Überprüfen der mechanischen Integrität von Stabilisierungselementen (12, 12a,b), welche die Schaufelblätter der Laufschaufeln einer Turbine, insbesondere einer Dampfturbine, in Umfangsrichtung untereinander mechanisch koppeln, im eingebauten Zustand, wobei benachbarte Stabilisierungselemente (12a, 12b) jeweils in einem Eingriffsbereich (14) ineinandergreifen.

Eine schnelle Inspektion mit reproduzierbaren Ergebnissen wird dadurch erreicht, dass das im Eingriffsbereich (14) befindliche Materialvolumen der Stabilisierungselemente (12a, 12b) von aussen mit Ultraschall auf das Vorhandensein von Rissen automatisch abgetastet wird.

## Beschreibung

### TECHNISCHES GEBIET

Die vorliegende Erfindung bezieht sich auf das Gebiet der zerstörungsfreien Werkstoffprüfung im Bereich von Turbinen. Sie betrifft ein Verfahren zum Überprüfen der mechanischen Integrität von Stabilisierungselementen an den Laufschaufeln einer Turbine gemäss dem Oberbegriff des Anspruchs 1 sowie eine Abtastvorrichtung zur Durchführung des Verfahrens.

### STAND DER TECHNIK

Dampfturbinen sind, vor allem im Niederdruckbereich, mit Laufschaufeln grosser Länge ausgestattet, die, wenn keine geeigneten Gegenmassnahmen ergriffen werden, im Betrieb zu unerwünschten Schwingungen neigen. Es ist bekannt, als Gegenmassnahme eine mechanische Kopplung zwischen den Schaufelblättern der Laufschaufeln im Bereich der Schaufelspitze vorzusehen, wie dies beispielsweise in der DE 102008059836A1 offenbart ist.

Es ist aber auch bekannt, derartige Kopplungen durch spezielle Stabilisierungselemente in einem mittleren Bereich der Schaufelblätter vorzunehmen, wie dies in der Druckschrift US 4257743 beschrieben ist.

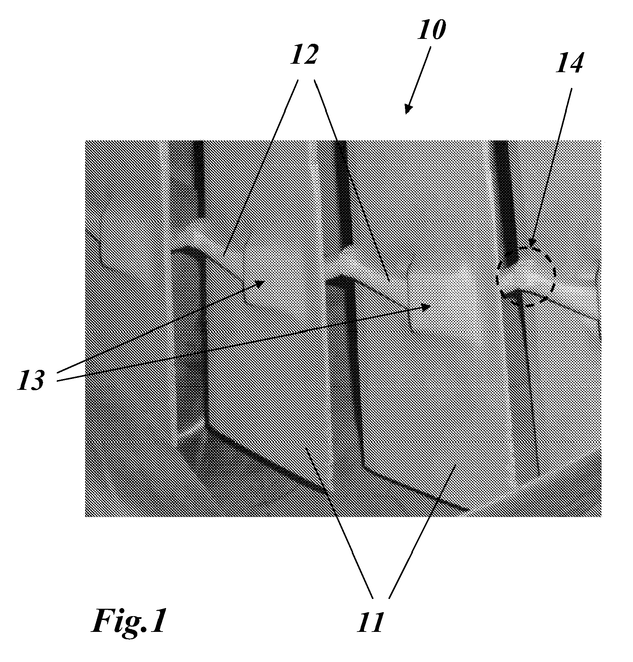

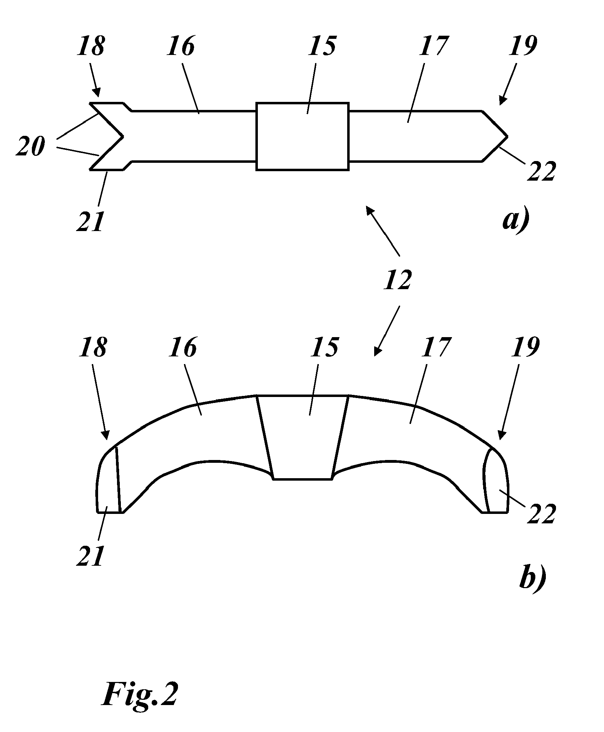

In Fig. 1 ist in einem Ausschnitt eine vergleichbare Kopplung gezeigt. Die dortigen Laufschaufeln 11 einer Dampfturbine 10 weisen jeweils eine Durchgangsöffnung 13 auf, durch die hindurch jeweils ein bogenförmiges Stabilisierungselement 12 gesteckt und mit Hartlot verlötet ist, dessen Form in Fig. 2 in der Draufsicht von oben (Fig. 2a) und in der Seitenansicht (Fig. 2b) dargestellt ist.

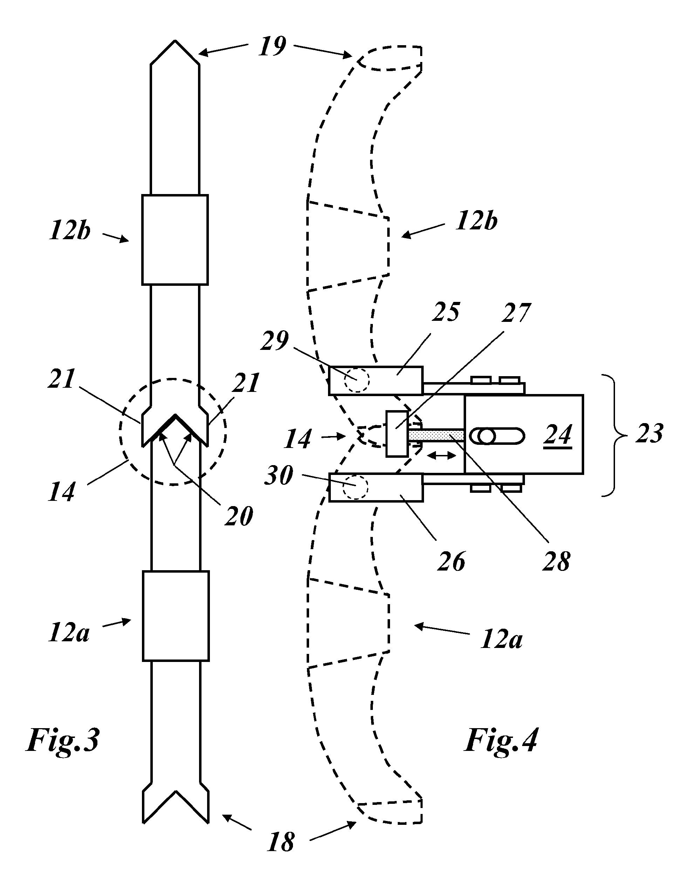

Die Stabilisierungselemente 12 der Fig. 1 und 2 sind alle gleichartig ausgebildet. Sie weisen jeweils zwei Endbereiche 18 und 19 auf. Der erste Endbereich 18 ist als V-förmige Nut (auch als "Kimme" bezeichnet) mit zwei Nutwänden 20 ausgebildet, der zweite Endbereich 19 dazu passend als V-förmiger Keil mit Keilwänden 22 (auch als "Korn" bezeichnet). Zwischen den Endbereichen 18, 19 ist in der Mitte ein verdicktes Mittelstück 15 angeordnet, von dem aus Arme 16, 17 zu den Endbereichen 18, 19 gehen. Die in Umfangsrichtung hintereinander angeordneten Stabilisierungselemente 12 greifen jeweils mit ihrem zweiten Endbereich 19 in den ersten Endbereich 18 des nachfolgenden Stabilisierungselements ein, wie dies beispielhaft in Fig. 3 gezeigt ist. Es entsteht auf diese Weise zwischen zwei aufeinanderfolgenden Stabilisierungselementen 12a, 12b ein Eingriffsbereich 14, der in Fig. 3 durch den gestrichelten Kreis markiert ist. Der Eingriffsbereich 14 ist an den gegenüberliegenden Aussenseiten durch zwei ebene Aussenflächen 21 begrenzt. Da die Schaufel verdreht ist, liegt das Korn immer nur einseitig an der Kimme an (Einbauseite). Wenn sich die Schaufel im Betrieb entwindet, liegt das Korn mit der anderen Seite an der Kimme an (Betriebsseite).

Es hat sich nun herausgestellt, dass bei den eingebauten Stabilisierungselementen 12 beziehungsweise 12a, 12b in dem Eingriffsbereich 14 während des Betriebes Risse auftreten können, die vorzugsweise kimmenseitig auftreten, d.h. in den Nutwänden 20 der ersten Endbereiche 18, und daher zunächst von aussen nicht sichtbar sind.

Grundsätzlich kann eine Rissinspektion des Eingriffsbereichs 14 mit der bekannten MPI-Methode (Magnetic Particle Inspection) vorgenommen werden. Diese Methode hat jedoch den Nachteil, dass Risse erst entdeckt werden können, wenn sie nach aussen treten, was in der Regel zu spät ist, um rechtzeitig defekte Elemente austauschen zu können (grosser Folgeschaden).

Es wäre auch denkbar, den Eingriffsbereich 14 manuell mittels Ultraschall zu untersuchen. Eine solche manuelle Untersuchung könnte zwar entstehende Risse früher entdecken, ist jedoch aufgrund der beengten Platzverhältnisse zwischen den Laufschaufeln 11 schwierig, zeitaufwändig und nicht sehr zuverlässig.

### DARSTELLUNG DER ERFINDUNG

Es ist daher eine Aufgabe der Erfindung, ein Verfahren der eingangs genannten Art anzugeben, welches die Nachteile bekannter Verfahren vermeidet und sich durch Schnelligkeit sowie reproduzierbare und zuverlässige Ergebnisse auszeichnet, sowie eine Abtastvorrichtung zur Durchführung des Verfahrens anzugeben.

Die Aufgabe wird durch die Gesamtheit der Merkmale der Ansprüche 1 und 10 gelöst. Wesentlich für das erfindungsgemässe Verfahren ist, dass das im Eingriffsbereich befindliche Materialvolumen der Stabilisierungselemente von aussen mit Ultraschall auf das Vorhandensein von Rissen automatisch abgetastet wird.

Eine Ausgestaltung des erfindungsgemässen Verfahrens ist dadurch gekennzeichnet, dass die Stabilisierungselemente im Eingriffsbereich aussen durch ebene Aussenflächen begrenzt sind, und dass die Abtastung entlang der Aussenflächen erfolgt.

Eine andere Ausgestaltung des erfindungsgemässen Verfahrens ist dadurch gekennzeichnet, dass die Abtastung in radialer Richtung erfolgt.

Eine andere Ausgestaltung des erfindungsgemässen Verfahrens ist dadurch gekennzeichnet, dass zur Abtastung ein oder mehrere Ultraschallstrahlen unter einem schrägen Einfallswinkel in den Eingriffsbereich beziehungsweise die Aussenflächen eingekoppelt werden.

Eine andere Ausgestaltung des erfindungsgemässen Verfahrens ist dadurch gekennzeichnet, dass die Abtastung gleichzeitig auf gegenüberliegenden Seiten des Eingriffsbereichs erfolgt.

Eine andere Ausgestaltung des erfindungsgemässen Verfahrens ist dadurch gekennzeichnet, dass fortlaufend der Abtastort ermittelt wird, und dass Abtastort und Abtastergebnis einander zugeordnet und in der Zuordnung abgespeichert werden.

Die erfindungsgemässe Abtastvorrichtung zur Durchführung des Verfahrens umfasst wenigstens einen Sensor zur Ultraschallabtastung, sowie erste Mittel zur Fixierung der Abtastvorrichtung an den Stabilisierungselementen im Eingriffsbereich und zweite Mittel zum automatischen Verfahren des wenigstens einen Sensors entlang des Eingriffsbereichs.

Eine Ausgestaltung der Abtastvorrichtung nach der Erfindung ist dadurch gekennzeichnet, dass der wenigstens eine Sensor ein einkanaliger Ultraschallsensor ist.

Eine andere Ausgestaltung der Abtastvorrichtung nach der Erfindung ist dadurch gekennzeichnet, dass der wenigstens eine Sensor ein Phased-Array-Signalwandler ist.

Eine andere Ausgestaltung der Abtastvorrichtung nach der Erfindung ist dadurch gekennzeichnet, dass der wenigstens eine Sensor zur Anpassung an die Aussenflächen der Stabilisierungselemente an der Abtastvorrichtung gelenkig gelagert ist. Hierdurch kann ein selbsttätiges und sicheres Anliegen der Sensoren an die ebenen Aussenflächen erreicht werden.

Eine andere Ausgestaltung der Abtastvorrichtung nach der Erfindung ist dadurch gekennzeichnet, dass zwei einander gegenüberliegende Sensoren zur gleichzeitigen Abtastung des Eingriffsbereichs von gegenüberliegenden Seiten vorgesehen sind. Hierdurch lässt sich die Inspektion wesentlich beschleunigen.

Eine andere Ausgestaltung der Abtastvorrichtung nach der Erfindung ist dadurch gekennzeichnet, dass jeder Sensor zwei oder mehr Signalwandler umfasst, die unter unterschiedlichen Winkeln Ultraschallstrahlen aussenden. Hierdurch wird eine genauere Bestimmung allfälliger Risse erreicht.

Insbesondere sind dabei die Ultraschallstrahlen relativ zur Aufsetzfläche des Sensors geneigt.

Eine andere Ausgestaltung der Abtastvorrichtung nach der Erfindung ist dadurch gekennzeichnet, dass die zweiten Mittel eine, vorzugsweise motorisch angetriebene, Verfahrmechanik umfassen.

Eine andere Ausgestaltung der Abtastvorrichtung nach der Erfindung ist dadurch gekennzeichnet, dass an der Abtastvorrichtung Mittel zur fortlaufenden Bestimmung der Position des wenigstens einen Sensors während des Abtastvorgangs vorgesehen sind. Hierdurch können die Ergebnisse auf einfache Weise graphisch dargestellt werden.

Eine andere Ausgestaltung der Abtastvorrichtung nach der Erfindung ist dadurch gekennzeichnet, dass die ersten Mittel Klammern zum lösbaren, vorzugsweise selbstzentrierenden, Fixieren der Abtastvorrichtung auf den Stabilisierungselementen aufweisen.

Eine andere Ausgestaltung der Abtastvorrichtung nach der Erfindung ist dadurch gekennzeichnet, dass die ersten Mittel Haltemagnete umfassen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem Ausschnitt mehrere Laufschaufeln einer Dampfturbine, deren Schaufelblätter über Stabilisierungselemente mechanisch miteinander gekoppelt sind;
- Fig. 2: die Konfiguration eines einzelnen Stabilisierungselements aus Fig. 1 in der Draufsicht von oben (Fig. 2a) und in der Seitenansicht (Fig. 2b);
- Fig. 3: in der Draufsicht von oben das Ineinandergreifen zweier Stabilisierungselemente gemäss Fig. 2 unter Ausbildung eines Eingriffsbereichs;
- Fig. 4: in der Seitenansicht eine auf die Stabilisierungselemente aufgesetzte Abtastvorrichtung zur Abtastung des Eingriffsbereichs gemäss einem Ausführungsbeispiel der Erfindung;
- Fig. 5: ein beispielhaftes Blockschema für den Betrieb einer Abtastvorrichtung nach Fig. 4;
- Fig. 6: in einer perspektivischen Seitenansicht ein Sensor für den Einsatz in einer Abtastvorrichtung gemäss Fig. 4, welcher zwei gegeneinander und gegen die Aufsetzfläche geneigte Ultraschallstrahlen erzeugt.

### WEGE ZUR AUSFÜHRUNG DER ERFINDUNG

Fig. 4 zeigt in der Seitenansicht eine auf die (nur gestrichelt gezeichneten) Stabilisierungselemente 12a, 12b aufgesetzte Abtastvorrichtung 23 zur Abtastung des Eingriffsbereichs 14 gemäss einem Ausführungsbeispiel der Erfindung. Die Abtastvorrichtung 23 hat ein Gehäuse 24, in welchem eine Verfahrmechanik 28 untergebracht und geführt ist, mit welcher ein am vorderen Ende der Verfahrmechanik 28 angebrachter Sensor 27 für die Ultraschall-Inspektion in radialer Richtung, bezogen auf die Turbinenachse, gesteuert hin- und hergefahren werden kann. Wird die Verfahrmechanik 28 beispielsweise durch einen Elektromotor angetrieben, ist dieser im Inneren des Gehäuses 24 untergebracht. Nicht dargestellt ist in Fig. 4 ein Kabel, welches vom Gehäuse 24 ausgeht und Stromversorgungs- sowie Signalleitungen enthält.

An dem Gehäuse 24 der Abtastvorrichtung 23 sind an gegenüberliegenden Seiten U-förmige Klammern 25, 26 angebracht, mit denen die Abtastvorrichtung 23 auf beiden Seiten des Eingriffsbereichs 14 klemmend auf die angrenzenden Arme 16, 17 der im Eingriffsbereich 14 überlappenden Stabilisierungselemente 12a, 12b geschoben und fixiert werden kann. Zur zusätzlichen Fixierung können im Bereich der Klammern 25, 26 Haltemagnete 29, 30 vorgesehen werden, welche die Klemmkräfte der Klammern 25, 26 unterstützen.

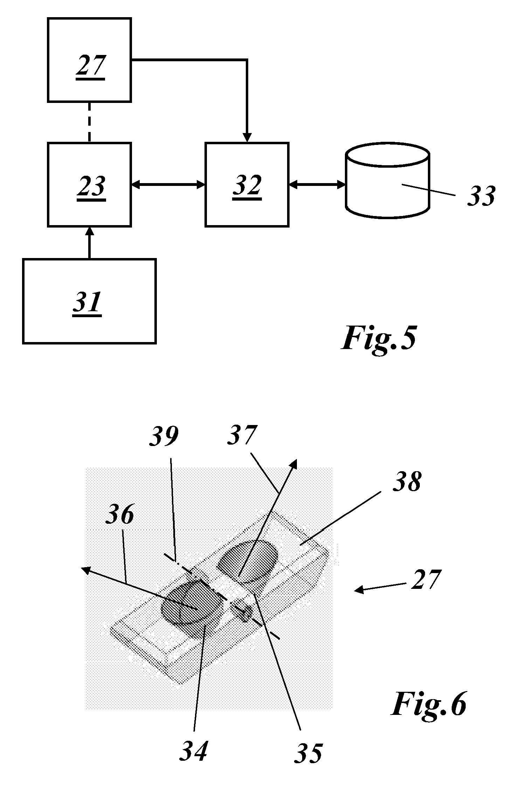

Die vom Sensor 27 abgegebenen und auch wieder aufgenommenen Ultraschallwellen werden über die ebenen Aussenflächen 21 des Eingriffsbereichs 14 ein- beziehungsweise aus gekoppelt. Damit diese Ein- und Auskopplung optimal erfolgen kann, muss der Sensor 27 mit seiner Aufsetzfläche (38 in Fig. 6) möglichst vollflächig auf der jeweiligen Aussenfläche 21 aufliegen. Um dies zu erleichtern, ist der Sensor 27 am Ende der Verfahrmechanik 28 vorzugsweise gelenkig, zum Beispiel kardanisch oder um eine Achse (39 in Fig. 6) schwenkbar, angebracht.

Um den Abtastvorgang zu verkürzen, kann für jede der Aussenflächen 21 ein entsprechender Sensor 27 vorgesehen werden. Die Abtastung mit Ultraschall erfolgt dann gleichzeitig von gegenüberliegenden Seiten. Gemäss Fig. 6 kann jeder Sensor 27 zwei oder mehr Signalwandler 34, 35umfassen, die nach dem Puls-Echo-Prinzip arbeiten und unter unterschiedlichen Winkeln Ultraschallstrahlen 36, 37 aussenden. Insbesondere können die Ultraschallstrahlen 36, 37 dabei relativ zur Aufsetzfläche 38 des Sensors 27 geneigt sein. Der Sensor 27 kann aber auch ein Phased-Array-Signalwandler sein, dessen Ultraschallstrahl durch Veränderung der Phasenbeziehung verschwenkt werden kann.

Besonders vorteilhaft ist es, wenn die Abtastvorrichtung mit Positionssensoren versehen ist, die fortlaufend beim Abtastvorgang die Position des Sensors oder der Sensoren 27 aufnehmen, so dass jeder Sensorposition das entsprechende Abtastergebnis zugeordnet werden kann und bei der Auswertung eine zweidimensionale Darstellung der Abtastergebnisse möglich ist.

Zur Steuerung des Abtastvorgangs ist eine Blockschaltung gemäss Fig. 5 geeignet. Eine Motorsteuerung 31, die gleichzeitig auch eine Stromversorgung für den motorischen Antrieb enthält, ist über ein Kabel mit der Abtastvorrichtung 23 verbunden. Die Steuerung 31 steuert die Bewegung der Verfahrmechanik 28 und damit den Abtastweg des Sensors 27. Eine externe Sensorelektronik 32 ist mit dem Sensor 27 verbunden und erhält von dort die entsprechenden Abtastsignale. Darüber hinaus erhält die Sensorelektronik 32 aus der Abtastvorrichtung 23 die ermittelten Positionswerte des Sensors 27. Beide Grössen werden miteinander verknüpft in einem Datenspeicher 33 abgelegt und können zur bildlichen Darstellung des Ergebnisses oder zum Vergleich mit anderen Ergebnissen abgerufen werden.

### BEZUGSZEICHENLISTE

- 10: Turbine (Dampfturbine)
- 11: Laufschaufel
- 12,12a,b: Stabilisierungselement (Bogen)
- 13: Durchgangsöffnung
- 14: Eingriffsbereich
- 15: Mittelstück
- 16,17: Arm
- 18,19: Endbereich (nutförmig, keilförmig)
- 20: Nutwand
- 21: Aussenfläche
- 22: Keilwand
- 23: Abtastvorrichtung (Scanner)
- 24: Gehäuse
- 25,26: Haltemittel (z.B. Klammer)
- 27: Sensor
- 28: Verfahrmechanik
- 29,30: Haltemagnet
- 31: Motorsteuerung
- 32: Sensorelektronik
- 33: Datenspeicher
- 34,35: Signalwandler
- 36,37: Ultraschallstrahl
- 38: Aufsetzfläche
- 39: Achse

## Patentansprüche

1. Verfahren zum Überprüfen der mechanischen Integrität von Stabilisierungselementen (12, 12a,b), welche die Schaufelblätter der Laufschaufeln einer Turbine (10), insbesondere einer Dampfturbine, in Umfangsrichtung untereinander mechanisch koppeln, im eingebauten Zustand, wobei benachbarte Stabilisierungselemente (12a, 12b) jeweils in einem Eingriffsbereich (14) ineinandergreifen, **dadurch gekennzeichnet, dass** das im Eingriffsbereich (14) befindliche Materialvolumen der Stabilisierungselemente (12a, 12b) von aussen mit Ultraschall auf das Vorhandensein von Rissen automatisch abgetastet wird.

2. Verfahren nach Anspruch 1, **dadurch gekennzeichnet, dass** die Stabilisierungselemente (12a, 12b) im Eingriffsbereich (14) aussen durch ebene Aussenflächen (21) begrenzt sind, und dass die Abtastung entlang der Aussenflächen (21) erfolgt.

3. Verfahren nach Anspruch 2, **dadurch gekennzeichnet, dass** die Abtastung in radialer Richtung erfolgt.

4. Verfahren nach einem der Ansprüche 1 bis 3, **dadurch gekennzeichnet, dass** zur Abtastung ein oder mehrere Ultraschallstrahlen (36, 37) unter einem schrägen Einfallswinkel in den Eingriffsbereich (14) beziehungsweise die Aussenflächen (21) eingekoppelt werden.

5. Verfahren nach einem der Ansprüche 1 bis 4, **dadurch gekennzeichnet, dass** die Abtastung gleichzeitig auf gegenüberliegenden Seiten des Eingriffsbereichs (14) erfolgt.

6. Verfahren nach einem der Ansprüche 1-5, **dadurch gekennzeichnet, dass** fortlaufend der Abtastort ermittelt wird, und dass Abtastort und Abtastergebnis einander zugeordnet und in der Zuordnung abgespeichert werden.

7. Abtastvorrichtung (23) zur Durchführung des Verfahrens nach einem der Ansprüche 1-6, umfassend wenigstens einen Sensor (27) zur Ultraschallabtastung, sowie erste Mittel (25, 26) zur Fixierung der Abtastvorrichtung (23) an den Stabilisierungselementen (12a, 12b) im Eingriffsbereich (14) und zweite Mittel (28) zum automatischen Verfahren des wenigstens einen Sensors (27) entlang des Eingriffsbereichs (14).

8. Abtastvorrichtung nach Anspruch 7, **dadurch gekennzeichnet, dass** der wenigstens eine Sensor (27) ein einkanaliger Ultraschallsensor ist.

9. Abtastvorrichtung nach Anspruch 7, **dadurch gekennzeichnet, dass** der wenigstens eine Sensor (27) ein Phased-Array-Signalwandler ist.

10. Abtastvorrichtung nach einem der Ansprüche 7-9, **dadurch gekennzeichnet, dass** der wenigstens eine Sensor (27) zur Anpassung an die Aussenflächen (21) der Stabilisierungselemente (12; 12a,b) an der Abtastvorrichtung (23) gelenkig gelagert ist.

11. Abtastvorrichtung nach einem der Ansprüche 7-10, **dadurch gekennzeichnet, dass** zwei einander gegenüberliegende Sensoren (27) zur gleichzeitigen Abtastung des Eingriffsbereichs (14) von gegenüberliegenden Seiten vorgesehen sind.

12. Abtastvorrichtung nach einem der Ansprüche 7-11, **dadurch gekennzeichnet, dass** jeder Sensor (27) zwei oder mehr Signalwandler (34, 35) umfasst, die unter unterschiedlichen Winkeln Ultraschallstrahlen (36, 37) aussenden.

13. Abtastvorrichtung nach Anspruch 12, **dadurch gekennzeichnet, dass** die Ultraschallstrahlen (36, 37) relativ zur Aufsetzfläche (38) des Sensors (27) geneigt sind.

14. Abtastvorrichtung nach einem der Ansprüche 7-13, **dadurch gekennzeichnet, dass** die zweiten Mittel eine, vorzugsweise motorisch angetriebene, Verfahrmechanik (28) umfassen.

15. Abtastvorrichtung nach einem der Ansprüche 7-14, **dadurch gekennzeichnet, dass** an der Abtastvorrichtung (23) Mittel zur fortlaufenden Bestimmung der Position des wenigstens einen Sensors (27) während des Abtastvorgangs vorgesehen sind.

16. Abtastvorrichtung nach einem der Ansprüche 7-15, **dadurch gekennzeichnet, dass** die ersten Mittel Klammern (25, 26) zum lösbaren, vorzugsweise selbstzentrierenden, Fixieren der Abtastvorrichtung (23) auf den Stabilisierungselementen (12; 12a,b) aufweisen.

17. Abtastvorrichtung nach einem der Ansprüche 7-16, **dadurch gekennzeichnet, dass** die ersten Mittel Haltemagnete (29, 30) umfassen.
